# EUROPEAN PATENT APPLICATION

(11) **EP 3 876 487 A1**
(43) Date of publication of application: **08.09.2021**
(21) Application number: 18939112.1
(22) Date of filing: 02.11.2018
(51) Int. Cl.: H04L 27/26

(54) **USER TERMINAL AND WIRELESS COMMUNICATIONS METHOD**

(71) Applicant: NTT DoCoMo, Inc., Tokyo 100-6150 (JP)
(72) Inventor: MATSUMURA, Yuki, Tokyo 100-6150 (JP); NAGATA, Satoshi, Tokyo 100-6150 (JP); WANG, Jing, Beijing 100190 (CN); HOU, Xiaolin, Beijing 100190 (CN)
(74) Representative: Hoffmann Eitle
(86) International application number: PCT/JP2018/040914
(87) International publication number: WO 2020/090122

(57) **Abstract**

A user terminal according to one aspect of the present disclosure includes: a receiving section that receives at least one signal of a synchronization signal block (SSB) or a channel state information reference signal (CSI-RS); and a control section that measures interference by using the signal in a first resource specified in a specification. According to one aspect of the present disclosure, interference can be measured appropriately.

## Description

### Technical Field

The present disclosure relates to a user terminal and a radio communication method in a next-generation mobile communication system.

### Background Art

In the universal mobile telecommunications system (UMTS) network, long term evolution (LTE) has been specified for the purpose of further increasing a data rate, providing low latency, and the like (see Non Patent Literature 1). Furthermore, LTE-Advanced (third generation partnership project (3GPP) Release (Rel.) 10-14) has been specified for the purpose of further increasing capacity and sophistication of LTE (3GPP Rel. 8 and 9).

LTE's successor systems (for example, also referred to as 5th generation mobile communication system (5G), 5G plus (+), New Radio (NR), or 3GPP Rel. 15 or later) have also been studied.

### Citation List

### Non Patent Literature

Non Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

Methods for beam management (BM) have been studied in future radio communication systems (for example, NR). In the beam management, it has been studied to perform beam selection on the basis of physical layer (Layer 1) Reference Signal Received Power (RSRP) (L1-RSRP) reported by a UE.

Furthermore, it has also been studied to use interference measurement (Ll-SINR, L1-RSRQ, and the like based on interference measurement) other than the L1-RSRP. However, it has not yet been studied for how to perform interference measurement. If the interference measurement is not performed appropriately, a decrease in communication throughput may become a problem.

Thus, an object of the present disclosure is to provide a user terminal and a radio communication method for appropriately measuring interference.

### Solution to Problem

A user terminal according to one aspect of the present disclosure includes: a receiving section that receives at least one signal of a synchronization signal block (SSB) or a channel state information reference signal (CSI-RS); and a control section that measures interference by using the signal in a first resource specified in a specification.

### Advantageous Effects of Invention

According to one aspect of the present disclosure, interference can be measured appropriately.

### Brief Description of Drawings

Figs. 1A and 1B are diagrams illustrating examples of RRC information elements regarding CSI report configuration and CSI resource configuration.
Figs. 2A and 2B are diagrams illustrating examples of RRC information elements regarding an NZP CSI-RS resource set and a CSI-SSB resource set.
Fig. 3 is a diagram illustrating an example of a schematic configuration of a radio communication system according to an embodiment.
Fig. 4 is a diagram illustrating an example of a configuration of a base station according to an embodiment.
Fig. 5 is a diagram illustrating an example of a configuration of a user terminal according to an embodiment.
Fig. 6 is a diagram illustrating an example of a hardware configuration of the base station and the user terminal according to an embodiment.

### Description of Embodiments

### (CSI)

In NR, a UE measures a channel state using a predetermined reference signal (or a resource for the reference signal), and feeds back (reports) Channel State Information (CSI) to a base station.

The UE may measure the channel state using a Channel State Information Reference Signal (CSI-RS), a synchronization Signal/Physical Broadcast Channel (SS/PBCH) block, a Synchronization Signal (SS), a demodulation reference signal (DMRS), and the like.

A CSI-RS resource may include at least one of a Non Zero Power (NZP) CSI-RS resource, a Zero Power (ZP) CSI-RS resource, or a CSI-Interference Measurement (IM) resource.

A resource for measuring a signal component for CSI may be referred to as a Signal Measurement Resource (SMR). The SMR may include, for example, the NZP CSI-RS resource for channel measurement, SSB, and the like.

A resource for measuring an interference component for CSI may be referred to as an Interference Measurement Resource (IMR). The IMR may include, for example, at least one of the NZP CSI-RS resource for interference measurement, SSB, ZP CSI-RS resource, or CSI-IM resource.

The SS/PBCH block is a block including the synchronization signal (for example, a Primary Synchronization Signal (PSS), a Secondary Synchronization Signal (SSS), and a PBCH (and a corresponding DMRS), and may be referred to as an SS block (SSB), or the like.

Note that, the CSI may include at least one of a Channel Quality Indicator (CQI), a Precoding Matrix Indicator (PMI), a CSI-RS Resource Indicator (CRI), an SS/PBCH Block Resource Indicator (SSBRI), a Layer Indicator (LI), a Rank Indicator (RI), Layer 1 Reference Signal Received Power (L1-RSRP), L1-Reference Signal Received Quality (RSRQ), an L1-Signal to Interference Plus Noise Ratio (SINR), an L1-Signal to Noise Ratio (SNR), or the like.

The CSI may include a plurality of parts. A CSI part 1 may include information with a relatively small number of bits (for example, the RI). A CSI part 2 may include information with a relatively large number of bits (for example, the CQI) such as information determined on the basis of the CSI part 1.

Furthermore, CSI may also be classified into several CSI types. The type and size of information to be reported may differ depending on the CSI type. For example, a CSI type configured for performing communication using a single beam (also referred to as type 1 (type I) CSI, CSI for a single beam, or the like), and a CSI type configured for performing communication using multiple beams (also referred to as type 2 (type II) CSI, CSI for multiple beams, or the like) may be specified. The usage of the CSI type is not limited to those.

A measurement result (for example, CSI) reported for beam management may be referred to as a beam measurement, a beam measurement result, a beam measurement report, or the like.

As a method of feeding back the CSI, Periodic CSI (P-CSI) reporting, Aperiodic CSI (A-CSI) reporting, Semi-Persistent CSI (SP-CSI) reporting, and the like have been studied.

The UE may be notified of CSI measurement configuration information using higher layer signaling, physical layer signaling, or a combination thereof.

In the present disclosure, higher layer signaling may be, for example, any of Radio Resource Control (RRC) signaling, Medium Access Control (MAC) signaling, broadcast information, and the like, or a combination thereof.

The MAC signaling may be, for example, a MAC Control Element (MAC CE), or a MAC Protocol Data Unit (PDU). The broadcast information may be, for example, a Master Information Block (MIB), a System Information Block (SIB), Remaining Minimum System Information (RMSI), Other System Information (OSI), or the like.

The physical layer signaling may be, for example, Downlink Control Information (DCI).

The CSI measurement configuration information may be configured using, for example, an RRC information element "CSI-MeasConfig". The CSI measurement configuration information may include CSI resource configuration information (an RRC information element "CSI-ResourceConfig"), CSI report configuration information (an RRC information element "CSI-ReportConfig"), and the like.

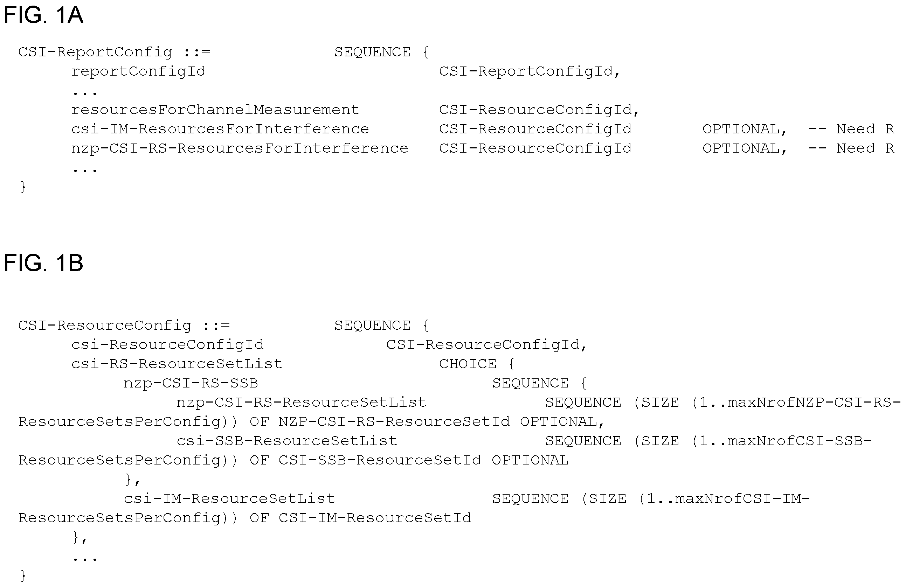

Figs. 1A and 1B are diagrams illustrating examples of RRC information elements regarding CSI report configuration and CSI resource configuration. In this example, an excerpt of a field (which may be referred to as a parameter) included in an information element is illustrated. Figs. 1A and 1B are described using Abstract Syntax Notation One (ASN.1) notation. Note that, drawings relating to other RRC information elements (or RRC parameters) of the present disclosure are also described in the same notation.

As illustrated in Fig. 1A, the CSI report configuration information ("CSI-ReportConfig") includes resource for channel measurement information ("resourcesForChannelMeasurement"). Furthermore, the CSI report configuration information may include NZP CSI-RS resource for interference measurement information ("nzp-CSI-RS-ResourcesForInterference"), CSI-IM resource for interference measurement information ("csi-IM-ResourcesForInterference"), and the like. These pieces of resource information correspond to CSI resource configuration information IDs (Identifiers) ("CSI-ResourceConfigId") .

Note that, the CSI resource configuration information IDs (which may be referred to as CSI resource configuration IDs) corresponding to respective pieces of resource information may respectively have different values.

As illustrated in Fig. 1B, the CSI resource configuration information ("CSI-ResourceConfig") may include a CSI resource configuration information ID, CSI-RS resource set list information ("csi-RS-ResourceSetList"), and the like. The CSI-RS resource set list includes NZP CSI-RS and SSB information ("nzp-CSI-RS-SSB") for measurement, and CSI-IM resource set list information ("csi-IM-ResourceSetList") .

Note that, a resource for channel measurement may be used for calculation of, for example, the CQI, PMI, L1-RSRP, and the like. Furthermore, a resource for interference measurement may be used for calculation of the L1-SINR, L1-SNR, L1-RSRQ, and other indicators regarding interference.

When the interference measurement is performed with CSI-IM, each CSI-RS for channel measurement may be associated with the CSI-IM resource in terms of resources, on the basis of the order of the CSI-RS resource and the CSI-IM resource in the corresponding resource set.

The "nzp-CSI-RS-SSB" may include NZP CSI-RS resource set list information ("nzp-CSI-RS-ResourceSetList") and SSB resource set list information for CSI measurement ("csi-SSB-ResourceSetList"). Each of these pieces of list information corresponds to one or more NZP CSI-RS resource set IDs ("CSI-ResourceConfigId") and CSI-SSB resource set IDs ("CSI-SSB-ResourceSetId"), and may be used for specifying a resource as a measurement target.

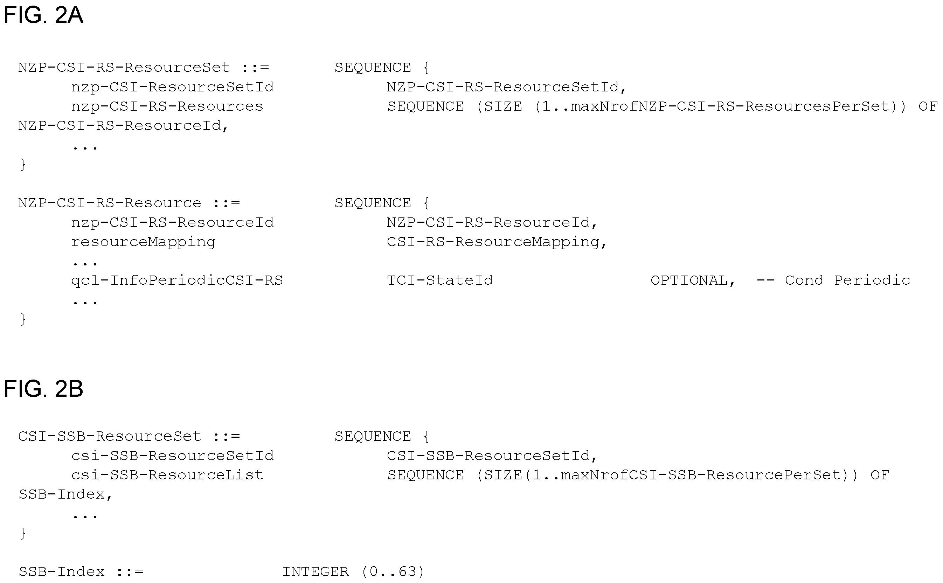

Figs. 2A and 2B are diagrams illustrating examples of RRC information elements regarding an NZP CSI-RS resource set and a CSI-SSB resource set.

As illustrated in Fig. 2A, the NZP CSI-RS resource set information ("NZP-CSI-RS-ResourceSet") includes the NZP CSI-RS resource set ID and one or more NZP CSI-RS resource IDs ("NZP-CSI-RS-ResourceId"). NZP CSI-RS resource information ("NZP-CSI-RS-Resource") may include the NZP CSI-RS resource ID and an ID ("TCI-state Id") of a Transmission Configuration Indication state (TCI state)). The TCI state will be described later.

As illustrated in Fig. 2B, CSI-SSB resource set information ("CSI-SSB-ResourceSet") includes the CSI-SSB resource set ID and one or more pieces of SSB index information ("SSB-Index"). The SSB index information is, for example, an integer of 0 or more and 63 or less, and may be used for identifying the SSB in an SS burst.

### (Beam Management)

In Rel-15 NR, a beam management (BM) method has been studied so far. In the beam management, it has been studied to perform beam selection on the basis of the L1-RSRP reported by the UE. Changing (switching) the beam of a signal/channel may correspond to changing the (Transmission Configuration Indication state) of the signal/channel.

Note that, the beam selected by the beam selection may be a transmission beam (Tx beam) or a reception beam (Rx beam). Furthermore, the beam selected by the beam selection may be a beam of the UE or a beam of the base station.

The UE may report (transmit) the measurement result for beam management using a PUCCH or PUSCH. The measurement result may be, for example, CSI including at least one of the L1-RSRP, L1-RSRQ, L1-SINR, L1-SNR, or the like. Furthermore, the measurement result may be referred to as a beam measurement, a beam measurement result, a beam report, a beam measurement report, or the like.

The CSI measurement for the beam report may include interference measurement. The UE may measure channel quality, interference, and the like using a resource for CSI measurement, and derive the beam report. The resource for CSI measurement may be, for example, at least one of an SS/PBCH block resource, a CSI-RS resource, another reference signal resource, or the like. Configuration information of a CSI measurement report may be configured in the UE using higher layer signaling.

The beam report may include a result of at least one of channel quality measurement or interference measurement. The result of the channel quality measurement may include, for example, the L1-RSRP. The result of the interference measurement may include the L1-SINR, L1-SNR, L1-RSRQ, and other indicators regarding interference (for example, any indicator other than the L1-RSRP).

Note that, the resource for CSI measurement for beam management may be referred to as a resource for beam measurement. Furthermore, the signal/channel as the CSI measurement target may be referred to as a signal for beam measurement. Furthermore, CSI measurement/report may be replaced with at least one of measurement/report for beam management, beam measurement/report, radio link quality measurement/report, or the like.

In Rel-16 NR and later, it has been studied to support at least one of the L1-SINR or L1-RSRQ.

When the amount of reporting is configured including at least one of the L1-RSRQ or L1-SINR (based on at least one of the SSB or CSI-RS) as a report target, the UE may make at least one of the following assumptions:
- Perform low latency beam selection (or measurement or reporting),
- Perform low overhead beam selection (or measurement or reporting),
- Perform beam failure recovery in a secondary cell,
- Use an interference measurement result (for example, RSRQ, SINR) for beam failure recovery,
- Use an interference measurement result (for example, RSRQ, SINR) for beam selection,
- Include an interference measurement result (for example, RSRQ, SINR) in a beam report.

Note that, the low latency beam selection may be referred to as fast beam selection, beam selection w/o TCI state, beam selection type II, TCI state specification type 2, or the like. Furthermore, the low overhead beam selection may be a method of skipping the report of the beam report under a predetermined condition, for example.

However, it is not clear how to perform the interference measurement for the L1-SINR or L1-RSRQ. If the interference measurement is not performed appropriately, problems may occur such as inability to appropriately perform beam selection and a decrease in communication throughput.

Thus, the present inventors have conceived of an appropriate interference measurement method for the L1-SINR or L1-RSRQ.

Hereinafter, embodiments according to the present disclosure will be described in detail with reference to the drawings. Radio communication methods according to respective embodiments may be applied individually or in combination.

In the present disclosure, it may be replaced with "interference", SINR, SNR, RSRQ, RSSI, other indicators regarding interference (for example, any indicator other than the L1-RSRP), interference power, or the like. Furthermore, the L1-SINR may be replaced with the L1-RSRQ. That is, each of the following embodiments describes the L1-SINR, but may be applied to the L1-RSRQ.

### (Radio Communication Method)

### <First Embodiment>

In a first embodiment, a default interference measurement mechanism (default interference measurement) for at least one of the L1-SINR or L1-RSRQ may be specified in a specification. The UE may support the default interference measurement mechanism.

The default interference measurement mechanism may measure interference by using a resource (default interference measurement resource definition, default interference measurement definition, default measurement definition) defined or fixed by the specification. For example, the default interference measurement definition may include at least some of the information elements in Figs. 1A, 1B, 2A, and 2B.

The UE may use the default interference measurement mechanism only when the beam selection and Beam Failure Recovery (BFR) of the L1-SINR are configured.

The default interference measurement mechanism may include at least one of SSB based measurement or CSI-RS based measurement, as described below. The UE may support at least one default interference measurement mechanism of the SSB based measurement or the CSI-RS based measurement.

### <<SSB based measurement>>

The interference may be a linear average of power contributions (unit [W]) of noise and interference over Resource Elements (REs) carrying a Secondary Synchronization Signal (SSS) within the same frequency bandwidth.

The L1-SINR for the SSB based measurement may be the one obtained by dividing the linear average over the power contributions (unit [W]) of the REs carrying the SSS by the linear average of the power contribution of noise and interference over the REs carrying the SSS within the same frequency bandwidth.

### <<CSI-RS based measurement>>

The interference may be a linear average of power contributions (unit [W]) of noise and interference over resource elements carrying CSI-RS within the same frequency bandwidth.

The L1-SINR for the CSI-RS based measurement may be the one obtained by dividing the linear average over the power contributions (unit [W]) of the REs carrying the CSI-RS by the linear average of the power contribution of noise and interference over the REs carrying the CSI-RS within the same frequency bandwidth.

A resource for interference measurement is defined as the default interference measurement definition, whereby the UE can appropriately perform the interference measurement regardless of whether or not the interference measurement is configured.

### <Second Embodiment>

In a second embodiment, the UE operation regarding the interference measurement will be described.

The UE may perform at least one of the following operation 1 or 2. The UE may perform at least one of the operation 1 or 2 only when the beam selection and BFR of the L1-SINR are configured.

### <<Operation 1>>

When an interference measurement resource for the L1-SINR (configured interference measurement resource, explicit measurement resource configuration) is not configured by higher layer signaling (for example, RRC signaling), the UE may calculate interference for the L1-SINR in accordance with a default interference measurement definition for L1-SINR measurement (defined interference measurement resource).

When the interference measurement resource for the L1-SINR is not configured by the higher layer signaling, and the PDSCH is scheduled on the default interference measurement definition, the UE may perform at least one of the following operations 1-1 to 1-4.

### <<Operation 1-1>>

The UE may perform rate matching or puncturing of the PDSCH for the default interference measurement definition. The UE may calculate the interference for the L1-SINR on a default interference measurement resource.

When the interference measurement resource for the L1-SINR is not configured by the higher layer signaling, and a part of the scheduled PDSCH overlaps with at least a part of the default interference measurement definition, the UE may perform the operation 1-1.

### <<Operation 1-2>>

The UE does not have to perform rate matching or puncturing of the PDSCH for the default interference measurement definition. The UE may calculate the interference for the L1-SINR on a resource that does not overlap with the scheduled PDSCH in the default interference measurement definition.

When the interference measurement resource for the L1-SINR is not configured by the higher layer signaling, and at least a part of the scheduled PDSCH overlaps with a part of the default interference measurement definition, the UE may perform the operation 1-2.

### <<Operation 1-3>>

The UE does not have to expect that a PDSCH that overlaps with the default interference measurement definition is scheduled. Alternatively, the UE does not have to decode the PDSCH that overlaps with the default interference measurement definition.

### <<Operation 1-4>>

The UE does not have to calculate the interference for the L1-SINR on the default interference measurement definition.

When the interference measurement resource for the L1-SINR is not configured by the higher layer signaling, and at least a part of the scheduled PDSCH overlaps with all of the default interference measurement definition, the UE may perform the operation 1-4. When the interference measurement resource for the L1-SINR is not configured by the higher layer signaling, and at least a part of the scheduled PDSCH overlaps with a part of the default interference measurement definition, the UE may perform the operation 1-4.

According to this operation 1, the UE can operate appropriately regardless of whether or not the scheduled PDSCH collides with the default interference measurement definition.

### <<Operation 2>>

When the interference measurement resource for the L1-SINR is configured by the higher layer signaling, the UE may calculate the interference for the L1-SINR on the configured interference measurement resource. For example, the configured interference measurement resource may include at least some of the information elements in Figs. 1A, 1B, 2A, and 2B.

Even when the default interference measurement definition for the L1-SINR is included (defined or configured), when an interference measurement resource configured for the L1-SINR is included (configured), the UE may calculate the interference by using the interference measurement resource.

Even when the PDSCH is scheduled on the default interference measurement definition, when the interference measurement resource for the L1-SINR is configured by the higher layer signaling, the UE may calculate the interference for the L1-SINR on the configured interference measurement resource.

When the interference measurement resource for the L1-SINR is configured by the higher layer signaling, and the PDSCH is scheduled on the configured interference measurement resource, the UE may perform at least one of the following operations 2-1 to 2-4.

### <<Operation 2-1>>

The UE may perform rate matching or puncturing of the PDSCH for the configured interference measurement resource. The UE may calculate the interference for the L1-SINR on the configured interference measurement resource.

When the interference measurement resource for the L1-SINR is configured by the higher layer signaling, and a part of the scheduled PDSCH overlaps with at least a part of the configured interference measurement resource, the UE may perform the operation 2-1.

### <<Operation 2-2>>

The UE does not have to perform rate matching or puncturing of the PDSCH for the configured interference measurement resource. The UE may calculate the interference for the L1-SINR on a resource that does not overlap with the scheduled PDSCH in the configured interference measurement resource.

When the interference measurement resource for the L1-SINR is configured by the higher layer signaling, and at least a part of the scheduled PDSCH overlaps with a part of the configured interference measurement resource, the UE may perform the operation 2-2.

### <<Operation 2-3>>

The UE does not have to expect that a PDSCH that overlaps with the configured interference measurement resource is scheduled. Alternatively, the UE does not have to decode the PDSCH that overlaps with the configured interference measurement resource.

### <<Operation 2-4>>

The UE may calculate the interference in accordance with the default interference measurement definition for the L1-SINR measurement. The UE does not have to expect that a PDSCH that overlaps with the default interference measurement definition is scheduled.

When the interference measurement resource for the L1-SINR is not configured by the higher layer signaling, and at least a part of the scheduled PDSCH overlaps with all of the configured interference measurement resource, the UE may perform the operation 2-4. When the interference measurement resource for the L1-SINR is not configured by the higher layer signaling, and at least a part of the scheduled PDSCH overlaps with a part of the configured interference measurement resource, the UE may perform the operation 2-4.

According to this operation 2, the UE can operate appropriately regardless of whether or not the scheduled PDSCH collides with the configured interference measurement resource.

### <Third Embodiment>

In a third embodiment, SSB based L1-SINR measurement (SSB based interference measurement) and CSI-RS based L1-SINR measurement (CSI-RS based interference measurement) will be described.

When the UE uses both the SSB based L1-SINR measurement and the CSI-RS based L1-SINR measurement, the measurement accuracy can be improved as compared with a case where only one of them is used.

When the UE uses only one of the SSB based L1-SINR measurement or the CSI-RS based L1-SINR measurement, the UE operation is simpler and the load on the UE can be reduced, as compared with the case where both are used.

Since the SSB is transmitted regardless of the configuration, the configuration overhead can be suppressed when the UE uses only the SSB based L1-SINR measurement, as compared with a case where the UE uses only the CSI-RS based L1-SINR measurement. Since the CSI-RS is configured individually for each UE, the measurement can be configured more flexibly and the measurement accuracy can be improved when the UE uses only CSI-RS based L1-SINR measurement, as compared with the case where the UE uses only the SSB based L1-SINR measurement.

The UE may perform one of the following measurements 1 to 6 in at least one of the SSB based L1-SINR measurement or the CSI-RS based L1-SINR measurement.

### <<Measurement 1>>

The UE supports both the default interference measurement definition for the L1-SINR and an explicit interference measurement resource configuration for the L1-SINR (interference measurement resource configured by higher layer signaling) for both the SSB based L1-SINR measurement and the CSI-RS based L1-SINR measurement.

The UE can perform interference measurement even when an explicit interference measurement resource is not configured, or even when the explicit interference measurement resource collides with the PDSCH.

### <<Measurement 2>>

The UE supports only the default interference measurement definition for both the SSB based L1-SINR measurement and the CSI-RS based L1-SINR measurement. The UE does not have to support the explicit interference measurement resource configuration for the L1-SINR.

By using the default interference measurement definition, it is possible to prevent configuration overhead when using the explicit interference measurement resource configuration.

### <<Measurement 3>>

The UE supports only the explicit interference measurement resource configuration for both the SSB based L1-SINR measurement and the CSI-RS based L1-SINR measurement. The UE does not have to support the default interference measurement definition for the L1-SINR.

By using the explicit interference measurement resource configuration, it is possible to use an interference measurement resource more flexible than in the case of using the default interference measurement definition.

### <<Measurement 4>>

The UE supports both the default interference measurement definition and the explicit interference measurement resource configuration for the CSI-RS based L1-SINR measurement, and supports only the default interference measurement definition for the SSB based L1-SINR measurement. In the UE, the SSB based L1-SINR measurement does not have to support the explicit interference measurement resource configuration.

The SSB based L1-SINR measurement follows the default interference measurement definition, whereby configuration overhead can be suppressed.

### <<Measurement 5>>

The UE supports both the default interference measurement definition and the explicit interference measurement resource configuration for the SSB based L1-SINR measurement, and supports only the explicit interference measurement resource configuration for the CSI-RS based L1-SINR measurement. In the UE, the CSI-RS based L1-SINR measurement does not have to support the default interference measurement definition.

A flexible interference measurement resource can be used for the CSI-RS based L1-SINR measurement by following the explicit interference measurement resource configuration.

### <<Measurement 6>>

The UE may report UL capability information indicating that at least one of the default interference measurement definition or the explicit interference measurement resource configuration for the L1-SINR is supported in at least one of the SSB based L1-SINR measurement or the CSI-RS based L1-SINR measurement.

In this case, the UE can appropriately perform the interference measurement depending on the UE capability information.

### <Fourth Embodiment>

In a fourth embodiment, UE capability and corresponding signaling may be specified.

For example, the UE may report the maximum number of interference measurement resources configured for L1-SINR measurement as UE capability information. The base station receiving the UE capability information may configure the maximum number or less of interference measurement resources in the UE.

According to this fourth embodiment, the UE can appropriately perform the interference measurement depending on the UE capability information.

### (Radio Communication System)

Hereinafter, a configuration is described of a radio communication system according to an embodiment of the present disclosure. In this radio communication system, communication is performed using one or a combination of the radio communication methods according to the embodiments of the present disclosure.

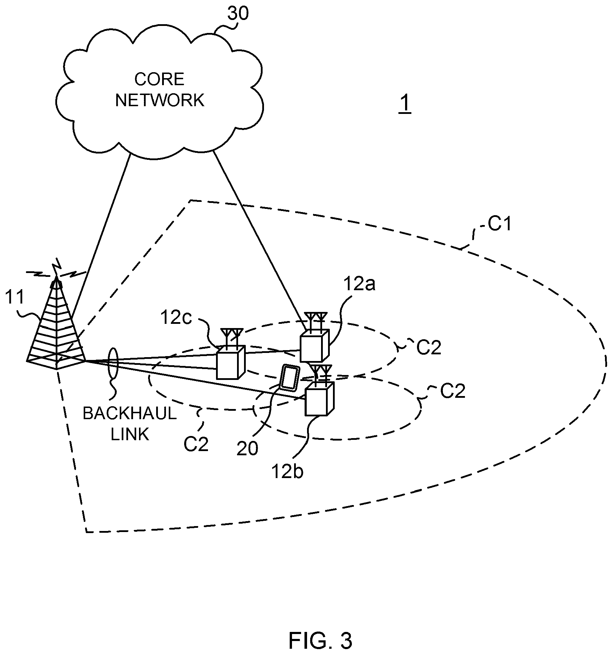

Fig. 3 is a diagram illustrating an example of a schematic configuration of a radio communication system according to an embodiment. A radio communication system 1 may be a system that implements communication using Long Term Evolution (LTE), 5th generation mobile communication system New Radio (5G NR), and the like specified by Third Generation Partnership Project (3GPP).

Furthermore, the radio communication system 1 may support dual connectivity (multi-Radio Access Technology (RAT) Dual Connectivity (MR-DC)) between a plurality of RATs. The MR-DC may include dual connectivity between LTE (Evolved Universal Terrestrial Radio Access (E-UTRA)) and NR (E-UTRA-NR Dual Connectivity (EN-DC)), dual connectivity between NR and LTE (NR-E-UTRA Dual Connectivity (NE-DC)), and the like.

In EN-DC, an LTE (E-UTRA) base station (eNB) is a Master Node (MN), and an NR base station (gNB) is a Secondary Node (SN). In NE-DC, an NR base station (gNB) is MN, and an LTE (E-UTRA) base station (eNB) is SN.

The radio communication system 1 may support dual connectivity between a plurality of base stations in identical RAT (for example, dual connectivity in which both MN and SN are NR base stations (gNB) (NR-NR Dual Connectivity (NN-DC)).

The radio communication system 1 may include a base station 11 that forms a macro cell C1 with a relatively wide coverage, and base stations 12 (12a to 12c) that are arranged in the macro cell C1 and that form small cells C2 narrower than the macro cell C1. A user terminal 20 may be located in at least one cell. The arrangement, number, and the like of cells and the user terminals 20 are not limited to the aspect illustrated in the drawing. Hereinafter, the base stations 11 and 12 will be collectively referred to as "base stations 10", unless these are distinguished from each other.

The user terminal 20 may be connected to at least one of the plurality of base stations 10. The user terminal 20 may use at least one of Carrier Aggregation (CA) and Dual Connectivity (DC) using a plurality of Component Carriers (CC).

Each CC may be included in at least one of a Frequency Range 1 (FR1) or a Frequency Range 2 (FR2). The macro cell C1 may be included in the FR1, and the small cell C2 may be included in the FR2. For example, the FR1 may be a frequency range of 6 GHz or less (sub-6 GHz), and the FR2 may be a frequency range higher than 24 GHz (above-24 GHz). Note that, the frequency ranges, definitions, and the like of the FR1 and FR2 are not limited to these, and for example, the FR1 may be a frequency range higher than the FR2.

Furthermore, the user terminal 20 may perform communication in each CC by using at least one of Time Division Duplex (TDD) or Frequency Division Duplex (FDD).

The plurality of base stations 10 may be connected to each other by wire (for example, an optical fiber or an X2 interface, or the like in compliance with Common Public Radio Interface (CPRI)) or by radio (for example, NR communication). For example, when NR communication is used as a backhaul between the base stations 11 and 12, the base station 11 corresponding to a higher-level station may be referred to as an Integrated Access Backhaul (IAB) donor, and the base station 12 corresponding to a relay station (relay) may be referred to as an IAB node.

A base station 10 may be connected to a core network 30 via another base station 10 or directly. The core network 30 may include, for example, at least one of Evolved Packet Core (EPC), 5G Core Network (5GCN), Next Generation Core (NGC), or the like.

The user terminal 20 may correspond to at least one of communication methods such as LTE, LTE-A, and 5G.

In the radio communication system 1, an Orthogonal Frequency Division Multiplexing (OFDM)-based radio access method may be used. For example, in at least one of Downlink (DL) or Uplink (UL), Cyclic Prefix OFDM (CP-OFDM), Discrete Fourier Transform Spread OFDM (DFT-s-OFDM), orthogonal Frequency Division Multiple Access (OFDMA), Single Carrier Frequency Division Multiple Access (SC-FDMA), and the like may be used.

The radio access method may be referred to as a waveform. Note that, in the radio communication system 1, another radio access method (for example, another single carrier transmission method or another multi-carrier transmission method) may be used as the UL and DL radio access methods.

In the radio communication system 1, as a downlink channel, a Physical Downlink Shared Channel (PDSCH) shared by the user terminals 20, a Physical Broadcast Channel (PBCH), a Physical Downlink Control Channel (PDCCH), or the like may be used.

Furthermore, in the radio communication system 1, as an uplink channel, a Physical Uplink Shared Channel (PUSCH) shared by the user terminals 20, a Physical Uplink Control Channel (PUCCH), a Physical Random Access Channel (PRACH), or the like may be used.

User data, higher layer control information, a System Information Block (SIB), and the like are transmitted by the PDSCH. User data, higher layer control information, and the like may be transmitted by the PUSCH. Furthermore, a Master Information Block (MIB) may be transmitted by the PBCH.

Lower layer control information may be transmitted by the PDCCH. The lower layer control information may include, for example, Downlink Control Information (DCI) including scheduling information of at least one of the PDSCH and the PUSCH.

Note that, the DCI that schedules the PDSCH may be referred to as DL assignment, DL DCI, and the like, and the DCI that schedules the PUSCH may be referred to as UL grant, UL DCI, and the like. Note that, the PDSCH may be replaced with DL data, and the PUSCH may be replaced with UL data.

For detection of the PDCCH, a control resource set (CORESET) and a search space may be used. The CORESET corresponds to a resource that searches for DCI. The search space corresponds to a search area and a search method for PDCCH candidates. One CORESET may be associated with one or a plurality of search spaces. The UE may monitor the CORESET associated with a certain search space on the basis of search space configuration.

One SS may correspond to a PDCCH candidate corresponding to one or a plurality of aggregation Levels. One or a plurality of search spaces may be referred to as a search space set. Note that, "search space", "search space set", "search space configuration", "search space set configuration", "CORESET", "CORESET configuration", and the like in the present disclosure may be replaced with each other.

Channel state information (CSI), delivery confirmation information (which may be referred to as, for example, hybrid automatic repeat request acknowledgement (HARQ-ACK), ACK/NACK, or the like), Scheduling Request (SR), and the like may be transmitted by the PUCCH. A random access preamble for establishing a connection with a cell may be transmitted by the PRACH.

Note that, in the present disclosure, downlink, uplink, and the like may be expressed without adding "link". Furthermore, various channels may be expressed without adding "physical" at the beginning thereof.

In the radio communication system 1, a Synchronization Signal (SS), a Downlink Reference Signal (DL-RS), and the like may be transmitted. In the radio communication system 1, a Cell-specific Reference Signal (CRS), a Channel State Information Reference Signal (CSI-RS), a demodulation reference signal (DMRS), a Positioning Reference Signal (PRS), a Phase Tracking Reference Signal (PTRS), and the like may be transmitted as the DL-RS.

The synchronization signal may be, for example, at least one of a Primary Synchronization Signal (PSS) and a Secondary Synchronization Signal (SSS). A signal block including the SS (PSS or SSS) and the PBCH (and the DMRS for the PBCH) may be referred to as an SS/PBCH block, an SSB (SS Block), and the like. Note that, the SS, the SSB, or the like may also be referred to as a reference signal.

Furthermore, in the radio communication system 1, a Sounding Reference Signal (SRS), a Demodulation Reference Signal (DMRS), and the like may be transmitted as an Uplink Reference Signal (UL-RS). Note that, the DMRS may be referred to as a user terminal-specific reference signal (UE-specific Reference Signal)".

### (Base Station)

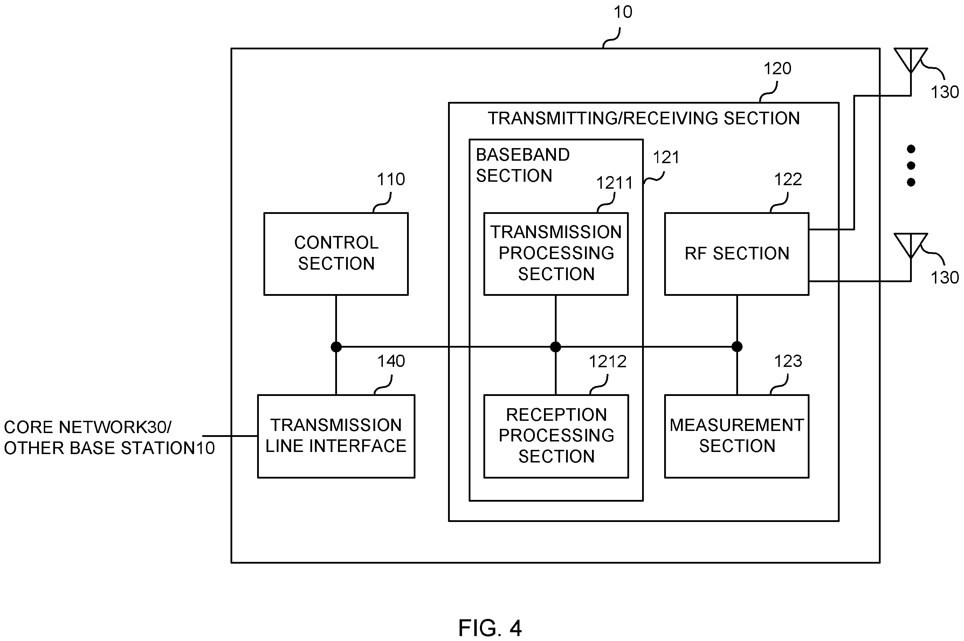

Fig. 4 is a diagram illustrating an example of a configuration of a base station according to an embodiment. The base station 10 includes a control section 110, a transmitting/receiving section 120, a
transmission/reception antenna 130, and a transmission line interface 140. Note that, one or more each of the control sections 110, the transmitting/receiving sections 120, the transmission/reception antennas 130, and the transmission line interfaces 140 may be included.

Note that, although this example mainly describes functional blocks of a characteristic part of the present embodiment, it may be assumed that the base station 10 includes other functional blocks that are necessary for radio communication as well. A part of processing of each section described below may be omitted.

The control section 110 controls the entire base station 10. The control section 110 can include a controller, a control circuit, and the like that are described on the basis of common recognition in the technical field related to the present disclosure.

The control section 110 may control signal generation, scheduling (for example, resource allocation or mapping), and the like. The control section 110 may control transmission/reception, measurement, and the like using the transmitting/receiving section 120, the transmission/reception antenna 130, and the transmission line interface 140. The control section 110 may generate data, control information, a sequence, and the like to be transmitted as signals, and transfer the data, control information, sequence, and the like to the transmitting/receiving section 120. The control section 110 may perform call processing (such as configuration or releasing) of a communication channel, state management of the base station 10, and management of a radio resource.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can include a transmitter/receiver, an RF circuit, a baseband circuit, a filter, a phase shifter, a measurement circuit, a transmission/reception circuit, and the like that are described on the basis of common recognition in the technical field related to the present disclosure.

The transmitting/receiving section 120 may be formed as an integrated transmitting/receiving section, or may include a transmitting section and a receiving section. The transmitting section may include the transmission processing section 1211 and the RF section 122. The receiving section may include the reception processing section 1212, the RF section 122, and the measurement section 123.

The transmission/reception antenna 130 can include an antenna described on the basis of common recognition in the technical field related to the present disclosure, for example, an array antenna.

The transmitting/receiving section 120 may transmit the above-described downlink channel, synchronization signal, downlink reference signal, and the like. The transmitting/receiving section 120 may receive the above-described uplink channel, uplink reference signal, and the like.

The transmitting/receiving section 120 may form at least one of a transmission beam or a reception beam by using digital beam forming (for example, precoding), analog beam forming (for example, phase rotation), and the like.

The transmitting/receiving section 120 (transmission processing section 1211) may perform Packet Data Convergence Protocol (PDCP) layer processing, Radio Link Control (RLC) layer processing (for example, RLC retransmission control), Medium Access Control (MAC) layer processing (for example, HARQ retransmission control), and the like on, for example, data, control information, and the like acquired from the control section 110, to generate a bit string to be transmitted.

The transmitting/receiving section 120 (transmission processing section 1211) may perform transmission processing such as channel encoding (which may include error correction encoding), modulation, mapping, filtering processing, Discrete Fourier Transform (DFT) processing (if necessary), Inverse Fast Fourier Transform (IFFT) processing, precoding, or digital-analog conversion on the bit string to be transmitted, to output a baseband signal.

The transmitting/receiving section 120 (RF section 122) may perform modulation to a radio frequency range, filtering processing, amplification, and the like on the baseband signal, to transmit a signal in the radio frequency range via the transmission/reception antenna 130.

Meanwhile, the transmitting/receiving section 120 (RF section 122) may perform amplification, filtering processing, demodulation to a baseband signal, and the like on the signal in the radio frequency range received by the transmission/reception antenna 130.

The transmitting/receiving section 120 (reception processing section 1212) may apply reception processing such as analog-digital conversion, Fast Fourier Transform (FFT) processing, Inverse Discrete Fourier Transform (IDFT) processing (if necessary), filtering processing, demapping, demodulation, decoding (which may include error correction decoding), MAC layer processing, RLC layer processing, or PDCP layer processing on the acquired baseband signal, to acquire user data and the like.

The transmitting/receiving section 120 (measurement section 123) may perform measurement on the received signal. For example, the measurement section 123 may perform Radio Resource Management (RRM) measurement, Channel State Information (CSI) measurement, and the like on the basis of the received signal. The measurement section 123 may measure received power (for example, Reference Signal Received Power (RSRP)), received quality (for example, Reference Signal Received Quality (RSRQ), Signal To Interference plus Noise Ratio (SINR), or Signal to Noise Ratio (SNR)), signal strength (for example, Received Signal Strength Indicator (RSSI)), propagation path information (for example, CSI), and the like. The measurement result may be output to the control section 110.

The transmission line interface 140 may perform transmission/reception of a signal (backhaul signaling) to/from an apparatus, another base station 10, or the like included in the core network 30, and may perform acquisition, transmission, or the like of user data (user plane data), control plane data, and the like for the user terminal 20.

Note that, the transmitting section and the receiving section of the base station 10 in the present disclosure may include at least one of the transmitting/receiving section 120, the transmission/reception antenna 130, or the transmission line interface 140.

Furthermore, the transmitting/receiving section 120 may transmit at least one signal of the synchronization signal block (SSB, SS/PBCH block, SSS) or the channel state information reference signal (CSI-RS). The control section 210 may measure the interference by using the signal in a first resource specified in the specification (for example, the default interference measurement definition).

The transmitting/receiving section 120 may receive the capability information from the user terminal 20 and notify the user terminal 20 of the interference measurement resource configuration on the basis of the capability information.

### (User Terminal)

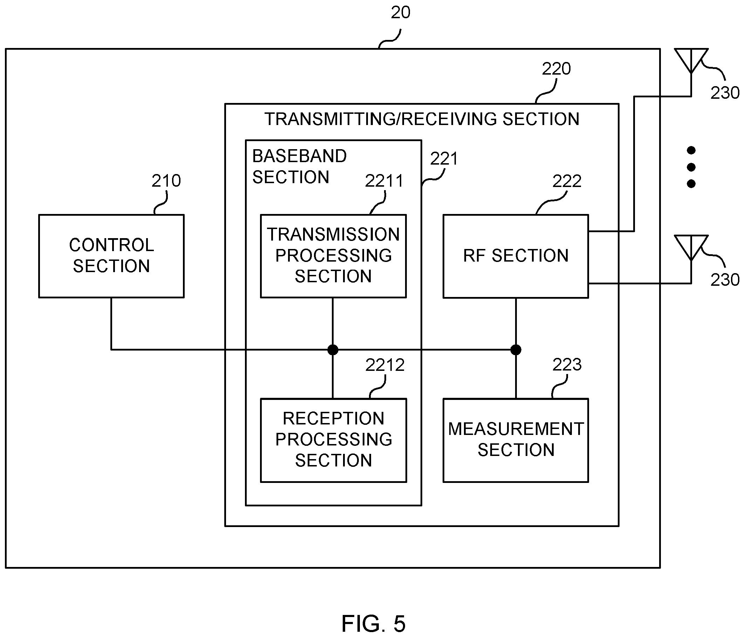

Fig. 5 is a diagram illustrating an example of a configuration of a user terminal according to an embodiment. The user terminal 20 includes a control section 210, a transmitting/receiving section 220, and a transmission/reception antenna 230. Note that, one or more each of the control sections 210, the transmitting/receiving sections 220, and the transmission/reception antennas 230 may be included.

Note that, although this example mainly describes functional blocks of a characteristic part of the present embodiment, it may be assumed that the user terminal 20 includes other functional blocks that are necessary for radio communication as well. A part of processing of each section described below may be omitted.

The control section 210 controls the entire user terminal 20. The control section 210 can include a controller, a control circuit, and the like that are described on the basis of common recognition in the technical field related to the present disclosure.

The control section 210 may control signal generation, mapping, and the like. The control section 210 may control transmission/reception, measurement, and the like using the transmitting/receiving section 220 and the transmission/reception antenna 230. The control section 210 may generate data, control information, a sequence, and the like to be transmitted as signals, and may transfer the data, control information, sequence, and the like to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can include a transmitter/receiver, an RF circuit, a baseband circuit, a filter, a phase shifter, a measurement circuit, a transmission/reception circuit, and the like that are described on the basis of common recognition in the technical field related to the present disclosure.

The transmitting/receiving section 220 may be formed as an integrated transmitting/receiving section, or may include a transmitting section and a receiving section. The transmitting section may include the transmission processing section 2211 and the RF section 222. The receiving section may include the reception processing section 2212, the RF section 222, and the measurement section 223.

The transmission/reception antenna 230 can include an antenna described on the basis of common recognition in the technical field related to the present disclosure, for example, an array antenna.

The transmitting/receiving section 220 may receive the above-described downlink channel, synchronization signal, downlink reference signal, and the like. The transmitting/receiving section 220 may transmit the above-described uplink channel, uplink reference signal, and the like.

The transmitting/receiving section 220 may form at least one of a transmission beam or a reception beam by using digital beam forming (for example, precoding), analog beam forming (for example, phase rotation), and the like.

The transmitting/receiving section 220 (transmission processing section 2211) may perform PDCP layer processing, RLC layer processing (for example, RLC retransmission control), MAC layer processing (for example, HARQ retransmission control), and the like on, for example, data, control information, and the like acquired from the control section 210, to generate a bit string to be transmitted.

The transmitting/receiving section 220 (transmission processing section 2211) may perform transmission processing such as channel encoding (which may include error correction encoding), modulation, mapping, filtering processing, DFT processing (if necessary), IFFT processing, precoding, or digital-analog conversion on the bit string to be transmitted, to output a baseband signal.

Note that, whether or not to apply DFT processing may be determined on the basis of configuration of transform precoding. If transform precoding is enabled for a channel (for example, PUSCH), the transmitting/receiving section 220 (transmission processing section 2211) may perform DFT processing as the transmission processing to transmit the channel by using a DFT-s-OFDM waveform, and if not, DFT processing does not have to be performed as the transmission processing.

The transmitting/receiving section 220 (RF section 222) may perform modulation to a radio frequency range, filtering processing, amplification, and the like on the baseband signal, to transmit a signal in the radio frequency range via the transmission/reception antenna 230.

Meanwhile, the transmitting/receiving section 220 (RF section 222) may perform amplification, filtering processing, demodulation to a baseband signal, and the like on the signal in the radio frequency range received by the transmission/reception antenna 230.

The transmitting/receiving section 220 (reception processing section 2212) may apply reception processing such as analog-digital conversion, FFT processing, IDFT processing (if necessary), filtering processing, demapping, demodulation, decoding (which may include error correction decoding), MAC layer processing, RLC layer processing, or PDCP layer processing on the acquired baseband signal, to acquire user data and the like.

The transmitting/receiving section 220 (measurement section 223) may perform measurement on the received signal. For example, the measurement section 223 may perform RRM measurement, CSI measurement, and the like on the basis of the received signal. The measurement section 223 may measure received power (for example, RSRP), received quality (for example, RSRQ, SINR, or SNR), signal strength (for example, RSSI, power of noise and interference), propagation path information (for example, CSI), and the like. The measurement result may be output to the control section 210.

Note that, the transmitting section and the receiving section of the user terminal 20 in the present disclosure may include at least one of the transmitting/receiving section 220, the transmission/reception antenna 230, or the transmission line interface 240.

Furthermore, the transmitting/receiving section 220 may receive at least one signal of the synchronization signal block (SSB, SS/PBCH block, SSS) or the channel state information reference signal (CSI-RS). The control section 210 may measure the interference by using the signal in a first resource specified in the specification (for example, the default interference measurement definition).

Furthermore, the control section 210 may measure the interference by using the signal in the first resource when a second resource (for example, explicit interference measurement resource configuration) of the signal for interference measurement is not configured by higher layer signaling.

Furthermore, when the second resource is configured by the higher layer signaling and at least a part of a resource allocated to a downlink shared channel (PDSCH) overlaps with the second resource, the control section 210 may measure the interference by using the signal in at least one of the second resource (which performs rate matching or puncturing of the PDSCH), a part of the second resource (for example, a resource that does not overlap with the PDSCH), or the first resource.

Furthermore, the control section 210 may support at least one of interference measurement using the first resource or interference measurement using the second resource in at least one of interference measurement using the SSB (SSB based interference measurement, SSB based L1-SINR measurement) or interference measurement using the CSI-RS (CSI-RS based interference measurement, SSB-based L1-SINR measurement).

Furthermore, the control section 210 may report capability information indicating at least one of a maximum number of the second resource or supporting at least one of interference measurement using the first resource or interference measurement using the second resource in at least one of interference measurement using the SSB or interference measurement using the CSI-RS.

### (Hardware Configuration)

Note that, the block diagrams that have been used to describe the above embodiments illustrate blocks of functional units. These functional blocks (configuration sections) may be implemented by an arbitrary combination of at least one of hardware or software. Furthermore, an implementation method for each functional block is not particularly limited. That is, each functional block may be implemented by using one apparatus physically or logically aggregated, or may be implemented by directly or indirectly connecting two or more physically or logically separate apparatuses (by using wires, radio, or the like, for example) and using these plural apparatuses. The functional block may be implemented by combining the one or the plural apparatuses with software.

Here, functions include, but are not limited to, determining, determining, judging, computing, calculating, processing, deriving, investigating, searching, ascertaining, receiving, transmitting, outputting, accessing, resolving, selecting, choosing, establishing, comparing, assuming, expecting, considering, broadcasting, notifying, communicating, forwarding, configuring, reconfiguring, allocating, mapping, and assigning. For example, a functional block (configuration section) having a transmission function may be referred to as a transmitting unit, a transmitter, and the like. In any case, as described above, the implementation method is not particularly limited.

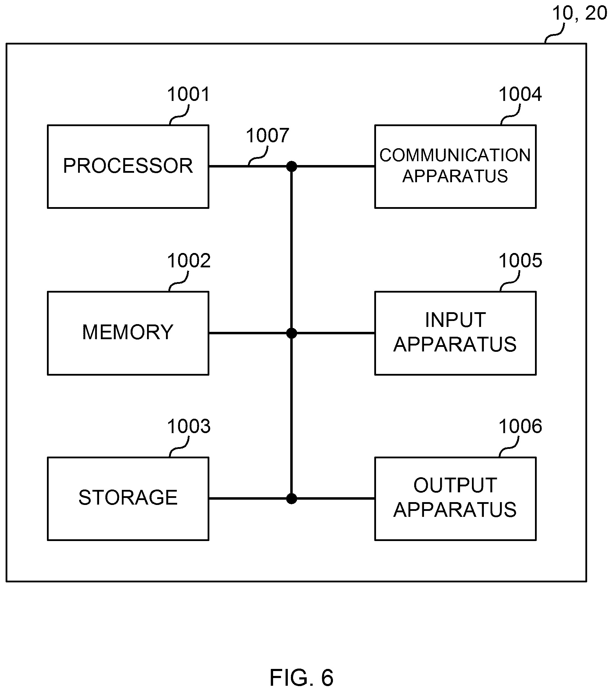

For example, the base station, the user terminal, and the like according to an embodiment of the present disclosure may function as a computer that executes the processing of the radio communication method of the present disclosure. Fig. 6 is a diagram illustrating an example of a hardware configuration of the base station and the user terminal according to an embodiment. Physically, the base station 10 and user terminal 20 described above may be formed as a computer apparatus that includes a processor 1001, a memory 1002, storage 1003, a communication apparatus 1004, an input apparatus 1005, an output apparatus 1006, a bus 1007, and the like.

Note that, in the present disclosure, the terms such as an apparatus, a circuit, a device, a section, or a unit can be replaced with each other. The hardware configuration of the base station 10 and the user terminal 20 may be configured including one or a plurality of the apparatuses illustrated in the drawings, or may be configured without including some apparatuses.

For example, although only one processor 1001 is illustrated, there may be a plurality of processors. Furthermore, the processing may be executed by one processor, or the processing may be executed by two or more processors simultaneously, sequentially, or using other techniques. Note that, the processor 1001 may be implemented with one or more chips.

For example, each function of the base station 10 and user terminal 20 is implemented by causing predetermined software (program) to be read onto hardware such as the processor 1001 and the memory 1002, and by the processor 1001 performing arithmetic operation to control communication via the communication apparatus 1004 and control at least one of reading or writing of data in the memory 1002 and storage 1003.

The processor 1001 operates an operating system to control an entire computer, for example. The processor 1001 may include a central processing unit (CPU) including an interface with peripheral equipment, a control apparatus, an operation apparatus, a register, and the like. For example, at least a part of the control section 110 (210), transmitting/receiving section 120 (220), and the like described above may be implemented by the processor 1001.

Furthermore, the processor 1001 reads a program (program code), a software module, data, and the like from at least one of the storage 1003 or the communication apparatus 1004 into the memory 1002, and executes various types of processing in accordance with these. As the program, a program is used that causes a computer to execute at least a part of the operation described in the embodiment described above. For example, the control section 110 (210) may be implemented by a control program that is stored in the memory 1002 and operates in the processor 1001, and another functional block may be implemented similarly.

The memory 1002 is a computer-readable recording medium, and may include, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a register, a cache, a main memory (main storage apparatus), and the like. The memory 1002 may store a program (program code), a software module, and the like executable for implementing the radio communication method according to an embodiment of the present disclosure.

The storage 1003 is a computer-readable recording medium, and may include, for example, at least one of a flexible disk, a floppy (registered trademark) disk, a magneto-optical disk (for example, a compact disc (compact disc ROM (CD-ROM) and the like), a digital versatile disc, and a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as an auxiliary storage apparatus.

The communication apparatus 1004 is hardware (transmission/reception device) for performing inter-computer communication via at least one of a wired network or a radio network, and is also referred to as a network device, a network controller, a network card, a communication module, and the like, for example. The communication apparatus 1004 may include a high frequency switch, a duplexer, a filter, a frequency synthesizer, and the like to implement, for example, at least one of Frequency Division Duplex (FDD) or Time Division Duplex (TDD). For example, the transmitting/receiving section 120 (220), the transmission/reception antenna 130 (230), and the like described above may be implemented by the communication apparatus 1004. The transmitting/receiving section 120 (220) may be implemented by being physically or logically separated into the transmitting section 120a (220a) and the receiving section 120b (220b).

The input apparatus 1005 is an input device that receives an input from outside (for example, a keyboard, a mouse, a microphone, a switch, a button, a sensor, and the like). The output apparatus 1006 is an output device for performing output to the outside (for example, a display, a speaker, a Light Emitting Diode (LED) lamp, and the like). Note that, the input apparatus 1005 and output apparatus 1006 may have an integrated form (for example, a touch panel).

Furthermore, apparatuses such as the processor 1001 and the memory 1002 are connected to each other by the bus 1007 for communicating information. The bus 1007 may be formed by using a single bus, or may be formed by using different buses for respective connections between apparatuses.

Furthermore, the base station 10 and user terminal 20 may include hardware such as a microprocessor, a Digital Signal Processor (DSP), an Application Specific Integrated Circuit (ASIC), a Programmable Logic Device (PLD), or a Field Programmable Gate Array (FPGA), and some or all of the functional blocks may be implemented by using the hardware. For example, the processor 1001 may be implemented by using at least one of these pieces of hardware.

### (Variations)

Note that, terms described in the present disclosure and terms necessary for understanding the present disclosure may be replaced with other terms that have the same or similar meanings. For example, a channel, a symbol, and a signal (or signaling) may be replaced with each other. Furthermore, the signal may be a message. A reference signal can be abbreviated as an RS, and may be referred to as a pilot, a pilot signal, and the like, depending on the standard applied. Furthermore, a Component Carrier (CC) may be referred to as a cell, a frequency carrier, a carrier frequency, and the like.

A radio frame may include one or a plurality of periods (frames) in a time domain. Each of one or a plurality of periods (frames) constituting a radio frame may be referred to as a subframe. Moreover, the subframe may include one or a plurality of slots in the time domain. The subframe may have a fixed time length (for example, 1 ms) that does not depend on numerology.

Here, the numerology may be a communication parameter applied to at least one of transmission and reception of a certain signal or channel. For example, the numerology may indicate at least one of Subcarrier Spacing (SCS), a bandwidth, a symbol length, a cyclic prefix length, a Transmission Time Interval (TTI), the number of symbols per TTI, a radio frame configuration, specific filtering processing to be performed by a transceiver in a frequency domain, specific windowing processing to be performed by the transceiver in the time domain, and the like.

A slot may include one or a plurality of symbols (Orthogonal Frequency Division Multiplexing (OFDM) symbols, Single Carrier Frequency Division Multiple Access (SC-FDMA) symbols, and the like) in the time domain. Furthermore, the slot may be a time unit based on the numerology.

The slot may include a plurality of mini slots. Each mini slot may include one or a plurality of symbols in the time domain. Furthermore, a mini slot may be referred to as a sub-slot. Each mini slot may include fewer symbols than a slot. A PDSCH (or PUSCH) transmitted in a time unit larger than a mini slot may be referred to as a PDSCH (PUSCH) mapping type A. A PDSCH (or PUSCH) transmitted using the mini slot may be referred to as a PDSCH (PUSCH) mapping type B.

The radio frame, subframe, slot, mini slot, and symbol all represent a time unit when transmitting a signal. Another name may be used corresponding to each of the radio frame, subframe, slot, mini slot, and symbol. Note that, the time units such as the frame, subframe, slot, mini slot, and symbol in the present disclosure may be replaced with each other.

For example, one subframe may be referred to as a TTI, a plurality of consecutive subframes may be referred to as a TTI, or one slot or one mini slot may be referred to as a TTI. That is, at least one of the subframe and TTI may be a subframe (1 ms) in the existing LTE, may be a period shorter than 1 ms (for example, one to thirteen symbols), or may be a period longer than 1 ms. Note that, the unit indicating the TTI may be referred to as the slot, mini slot, and the like instead of the subframe.

Here, the TTI refers to, for example, the minimum time unit of scheduling in the radio communication. For example, in LTE systems, the base station performs scheduling for allocating the radio resources (such as the frequency bandwidth and transmission power that can be used in each user terminal) to each user terminal in TTI units. Note that, definition of the TTI is not limited to this.

The TTI may be a transmission time unit of channel coded data packet (transport block), code block, codeword, and the like, or may be a processing unit of scheduling, link adaptation, and the like. Note that, when the TTI is given, a time interval (for example, the number of symbols) to which the transport block, code block, codeword, and the like are actually mapped may be shorter than the TTI.

Note that, when one slot or one mini slot is referred to as the TTI, one or more TTIs (that is, one or more slots or one or more mini slots) may be the minimum time unit of scheduling. Furthermore, the number of slots (the number of mini slots) forming the minimum time unit of the scheduling may be controlled.

A TTI having a time length of 1 ms may be referred to as a usual TTI (TTI in 3GPP Rel. 8 to 12), a normal TTI, a long TTI, a usual subframe, a normal subframe, a long subframe, a slot, and the like. A TTI that is shorter than the usual TTI may be referred to as a shortened TTI, a short TTI, a partial TTI (or fractional TTI), a shortened subframe, a short subframe, a mini slot, a sub-slot, a slot, and the like.

Note that, the long TTI (for example, the usual TTI, subframe, and the like) may be replaced with a TTI having a time length longer than 1 ms, and the short TTI (for example, the shortened TTI and the like) may be replaced with a TTI having a TTI length shorter than the TTI length of the long TTI and not shorter than 1 ms.

A Resource Block (RB) is a resource allocation unit of the time domain and frequency domain, and may include one or a plurality of consecutive subcarriers in the frequency domain. The number of subcarriers included in the RB may be the same regardless of the numerology, and may be 12, for example. The number of subcarriers included in the RB may be determined on the basis of the numerology.

Furthermore, the RB may include one or a plurality of symbols in the time domain, and have the length of one slot, one mini slot, one subframe, or one TTI. One TTI, one subframe, and the like may include one or a plurality of resource blocks.

Note that, one or a plurality of RBs may be referred to as a physical resource block (physical RB (PRB)), a SubCarrier Group (SCG), a Resource Element Group (REG), a PRB pair, an RB pair, and the like.

Furthermore, the resource block may include one or a plurality of Resource Elements (REs). For example, one RE may be a radio resource domain of one subcarrier and one symbol.

A Bandwidth Part (BWP) (which may be referred to as partial bandwidth and the like) may represent a subset of consecutive common resource blocks (RBs) for certain numerology in a certain carrier. Here, the common RB may be specified by an index of the RB based on a common reference point of the carrier. The PRB may be defined in a certain BWP and numbered within the BWP.

The BWP may include a BWP for UL (UL BWP) and a BWP for DL (DL BWP). For the UE, one or a plurality of BWPs may be configured within one carrier.

At least one of the configured BWPs may be active, and it is not necessary to assume that the UE transmits and receives a predetermined signal/channel outside the active BWP. Note that, a cell, a carrier, and the like in the present disclosure may be replaced with a BWP.

Note that, the structures of the radio frame, subframe, slot, mini slot, symbol, and the like described above are merely examples. For example, configurations may be variously changed, such as the number of subframes included in the radio frame, the number of slots per subframe or radio frame, the number of mini slots included in the slot, the number of symbols and RBs included in the slot or mini slot, the number of subcarriers included in the RB, and the number of symbols, the symbol length, and cyclic prefix (CP) length in the TTI.

Furthermore, the information and parameters described in the present disclosure may be represented in absolute values, represented in relative values with respect to predetermined values, or represented using other corresponding information. For example, the radio resource may be indicated by a predetermined index.

The names used for the parameters and the like in the present disclosure are not limited names in any respect. Moreover, an equation and the like using these parameters may differ from those explicitly disclosed in the present disclosure. Since various channels (Physical Uplink Control Channel (PUCCH), Physical Downlink Control Channel (PDCCH), and the like) and information elements may be identified by any suitable names, the various names allocated to these various channels and information elements are not limited names in any respect.

The information, signals, and the like described in the present disclosure may be represented using any of various different technologies. For example, the data, instruction, command, information, signal, bit, symbol, chip, and the like that may be referred to throughout the above description may be represented by the voltage, current, electromagnetic wave, magnetic field or magnetic particle, optical field or photon, or any combination thereof.

Furthermore, the information, signals, and the like may be output in at least one of a direction from a higher layer to a lower layer and a direction from the lower layer to the higher layer. The information, signals, and the like may be input and output via a plurality of network nodes.

The information, signals, and the like that are input and output may be stored in a specific location (for example, in a memory), or may be managed using a management table. The information, signals, and the like to be input and output can be overwritten, updated, or appended. The information, signals, and the like that are output may be deleted. The information, signals, and the like that are input may be transmitted to other apparatuses.

The notification of information may be performed using other methods without being limited to the aspects/embodiments described in the present disclosure. For example, the notification of information in the present disclosure may be performed by using physical layer signaling (for example, Downlink Control Information (DCI), Uplink Control Information (UCI)), higher layer signaling (for example, Radio Resource Control (RRC) signaling, broadcast information (Master Information Block (MIB), System Information Block (SIB), or the like), Medium Access Control (MAC) signaling), and another signal, or a combination thereof.

Note that, the physical layer signaling may be referred to as Layer 1/Layer 2 (L1/L2) control information (L1/L2 control signal), L1 control information (L1 control signal), and the like. Furthermore, the RRC signaling may be referred to as an RRC message, and may be, for example, an RRC Connection Setup message, an RRC Connection Reconfiguration message, and the like. Furthermore, notification of the MAC signaling may be given by using, for example, a MAC Control Element (MAC CE).

Furthermore, notification of predetermined information (for example, notification of "being X") does not necessarily have to be explicit, and may be given implicitly (for example, by not giving notification of the predetermined information or by notification of other information).

Judging may be performed by a one-bit value (0 or 1), by a boolean indicated by true or false, or by comparison of numerical values (for example, comparison with a predetermined value).

Regardless of whether software is referred to as software, firmware, middleware, microcode, or hardware description language, or referred to by other names, this should be interpreted broadly, to mean an instruction, an instruction set, a code, a code segment, a program code, a program, a subprogram, a software module, an application, a software application, a software package, a routine, a subroutine, an object, an executable file, an execution thread, a procedure, a function, and the like.

Furthermore, the software, instruction, information, and the like may be transmitted and received via transmission media. For example, when software is transmitted from a website, a server, or other remote sources by using at least one of wired technology (coaxial cable, optical fiber cable, twisted-pair, Digital Subscriber Line (DSL), and the like) or radio technology (infrared radiation, microwave, and the like), at least one of the wired technology or the radio technology is included in the definition of transmission media.

The terms "system" and "network" used in the present disclosure may be used interchangeably. The "network" may mean an apparatus (for example, a base station) included in the network.

In the present disclosure, the terms such as "precoding", "precoder", "weight (precoding weight)", "Quasi-Co-Location (QCL)", "Transmission Configuration Indication state (TCI state)", "spatial relation", "spatial domain filter", "transmission power", "phase rotation", "antenna port", "antenna port group", "layer", "number of layers", "rank", "resource", "resource set", "resource group", "beam", "beam width", "beam angle", "antenna", "antenna element", and "panel" may be used interchangeably.

In the present disclosure, the terms such as "Base Station (BS)", "radio base station", "fixed station", "NodeB", "eNodeB (eNB)", "gNodeB (gNB)", "access point", "Transmission Point (TP)", "Reception Point (RP)", "Transmission/Reception Point (TRP)", "panel", "cell", "sector", "cell group", "carrier", and "component carrier" may be used interchangeably. The base station may also be referred to by a term such as a macro cell, a small cell, a femto cell, a pico cell and the like.

The base station may accommodate one or a plurality of (for example, three) cells. When a base station accommodates a plurality of cells, the entire coverage area of the base station can be partitioned into multiple smaller areas, and a communication service can also be provided for each smaller area through base station subsystems (for example, indoor small base stations (Remote Radio Heads (RRHs))). The term "cell" or "sector" refers to all or part of the coverage area of at least one of the base station or base station subsystem that provides the communication service within this coverage.

In the present disclosure, the terms "Mobile Station (MS)", "user terminal", "User Equipment (UE)", "terminal", and the like may be used interchangeably.

A mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other appropriate terms.

At least one of the base station or mobile station may be referred to as a transmission apparatus, a reception apparatus, a radio communication apparatus, and the like. Note that, at least one of the base station or mobile station may be a device mounted on a mobile body, a mobile body itself, and the like. The mobile body may be a transportation (for example, a car, an airplane, and the like), an unmanned mobile body (for example, a drone, an autonomous car, and the like), or a (manned or unmanned) robot. Note that, at least one of the base station or the mobile station also includes an apparatus that does not necessarily move during a communication operation. For example, at least one of the base station or mobile station may be an Internet of Things (IoT) device such as a sensor.

Furthermore, the base station in the present disclosure may be replaced with the user terminal. For example, each aspect/embodiment of the present disclosure may be applied to a configuration in which communication between the base station and the user terminal is replaced with communication between a plurality of user terminals (which may be referred to as, for example, Device-to-Device (D2D), Vehicle-to-Everything (V2X), and the like). In this case, the user terminal 20 may have the function of the base station 10 described above. Furthermore, the terms such as "up" and "down" may be replaced with the term corresponding to the terminal-to-terminal communication (for example, "side"). For example, an uplink channel, a downlink channel, and the like may be replaced with a side channel.

Similarly, the user terminal in the present disclosure may be replaced with a base station. In this case, the base station 10 may have the function of the user terminal 20 described above.

Certain operations described in the present disclosure to be performed by the base station may, in some cases, be performed by their upper nodes. In a network including one or a plurality of network nodes including the base station, it is clear that various operations performed to communicate with terminals may be performed by the base station, one or a plurality of network nodes other than the base station (for example, Mobility Management Entity (MME), Serving-Gateway (S-GW), and the like are conceivable, but there is no limitation), or a combination thereof.

Each aspect/embodiment described in the present disclosure may be used alone, used in a combination, and switched in association with execution. Furthermore, the order of the processing procedures, sequences, flowcharts, and the like of each aspect/embodiment described in the present disclosure may be changed as long as there is no contradiction. For example, regarding the method described in the present disclosure, elements of various steps are presented using an exemplary order, and the order is not limited to the presented specific order.

Each aspect/embodiment described in the present disclosure may be applied to a system using Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), Future Radio Access (FRA), New Radio Access Technology (New-RAT), New Radio (NR), New radio access (NX), Future generation radio access (FX), Global System For Mobile Communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), other appropriate radio communication methods, and a next generation system extended on the basis of these. Furthermore, a plurality of systems may be combined to be applied (for example, a combination of LTE or LTE-A and 5G).

The term "on the basis of" used in the present disclosure does not mean "only on the basis of" unless otherwise specified. In other words, the term "on the basis of" means both "only on the basis of" and "at least on the basis of".

Reference to elements with designations such as "first", "second", and the like used in the present disclosure does not generally limit the quantity or order of those elements. These designations may be used in the present disclosure as a convenient method of distinguishing between two or more elements. Thus, the reference to the first and second elements does not mean that only two elements may be adopted, or that the first element must precede the second element in a certain manner.

The term "determining" used in the present disclosure may include a wide variety of operations. For example, "determining" may be regarded as "determining" of judging, calculating, computing, processing, deriving, investigating, looking up, search, inquiry (for example, looking up in a table, database, or another data structure), ascertaining, and the like.

Furthermore, "determining" may be regarded as "determining" of receiving (for example, receiving of information), transmitting (for example, transmitting of information), input, output, accessing (for example, accessing to data in a memory), and the like.

Furthermore, "determining" may be regarded as "determining" of resolving, selecting, choosing, establishing, comparing, and the like. In other words, "determining" may be regarded as "determining" of a certain operation.

Furthermore, "determining" may be replaced with "assuming", "expecting", "considering", and the like.

The "maximum transmission power" described in the present disclosure may mean a maximum value of transmission power, the nominal UE maximum transmit power, or the rated UE maximum transmit power.

The terms "connected" and "coupled" used in the present disclosure, or any variation of these terms mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be replaced with "access".

In the present disclosure, when two elements are connected together, it is conceivable that the two elements are "connected" or "coupled" to each other by using one or more electrical wires, cables, printed electrical connections, and the like, and, as some non-limiting and non-inclusive examples, by using electromagnetic energy having wavelengths in the radio frequency region, microwave region, or optical (both visible and invisible) region, or the like.

In the present disclosure, the terms "A and B are different" may mean "A and B are different from each other". Note that, the terms may mean that "A and B are each different from C". The terms such as "separate", "coupled", and the like may be interpreted similarly to "different".

When "include", "including", and variations of these are used in the present disclosure, these terms are intended to be inclusive similarly to the term "comprising". Moreover, the term "or" used in the present disclosure is intended to be not an exclusive-OR.

In the present disclosure, when articles are added by translation, for example, as "a", "an", and "the" in English, the present disclosure may include that nouns that follow these articles are plural.

In the above, the invention according to the present disclosure has been described in detail; however, it is obvious to those skilled in the art that the invention according to the present disclosure is not limited to the embodiments described in the present disclosure. The invention according to the present disclosure can be implemented as a corrected and modified mode without departing from the spirit and scope of the invention defined on the basis of the description of the claims. Thus, the description of the present disclosure is provided for the purpose of exemplification and explanation, and has no limitative meaning to the invention according to the present disclosure.

## Claims

1. A user terminal comprising:
a receiving section that receives at least one signal of a synchronization signal block (SSB) or a channel state information reference signal (CSI-RS); and
a control section that measures interference by using the signal in a first resource specified in a specification.

2. The user terminal according to claim 1, wherein the control section measures the interference by using the signal in the first resource when a second resource of the signal for interference measurement is not configured by higher layer signaling.

3. The user terminal according to claim 2, wherein when the second resource is configured by the higher layer signaling and at least a part of a resource allocated to a downlink shared channel overlaps with the second resource, the control section measures the interference by using the signal in at least one of the second resource, a part of the second resource, or the first resource.

4. The user terminal according to claim 2 or 3, wherein the control section supports at least one of interference measurement using the first resource or interference measurement using the second resource in at least one of interference measurement using the SSB or interference measurement using the CSI-RS.

5. The user terminal according to any of claims 2 to 4, wherein the control section reports capability information indicating at least one of a maximum number of the second resource or supporting at least one of interference measurement using the first resource or interference measurement using the second resource in at least one of interference measurement using the SSB or interference measurement using the CSI-RS.

6. A radio communication method for a user terminal, comprising:
receiving at least one signal of a synchronization signal block (SSB) or a channel state information reference signal (CSI-RS); and
measuring interference by using the signal in a first resource specified in a specification.
